(19) Europäisches Patentamt
European Patent Office
Office européen des brevets

(11) Veröffentlichungsnummer: **0 656 438 A1**

# (12) EUROPÄISCHE PATENTANMELDUNG

(21) Anmeldenummer: **94116790.0**

(22) Anmeldetag: **25.10.94**

(51) Int. Cl.[6]: **D06M 11/72**, D06M 13/432, D06M 11/71, D06M 11/55, D06M 11/76, D06M 15/277, D06M 15/576, D06M 15/657

(30) Priorität: **04.11.93 DE 4337592**

(43) Veröffentlichungstag der Anmeldung: **07.06.95 Patentblatt 95/23**

(84) Benannte Vertragsstaaten: **BE DE FR GB IT NL**

(71) Anmelder: **Pfersee Chemie GmbH**
**Rehlingerstrasse 1**
**D-86462 Langweid a. Lech (DE)**

(72) Erfinder: **Angele, Theodor**
**Lutzenbergerstrasse 6**
**D-86637 Wertingen (DE)**
Erfinder: **Chrobaczek, Harald, Dr.**
**Oblatterwallstrasse 38**
**D -86153 Augsburg (DE)**

## (54) Zusammensetzung für die flammhemmende Ausrüstung von Fasermaterialien.

(57) Zusammensetzungen, welche Harnstoff oder ein Salz des Harnstoffs, ein Guanidinphosphat, ein Ammoniumpolyphosphat und ein Alkalimetallsalz einer anorganischen Säure enthalten, eignen sich für die Behandlung von Fasermaterialien. Durch Aufbringen solcher Zusammensetzungen in Form wäßriger Lösungen oder Dispersionen auf Fasermaterialien wie z.B. Gewebe lassen sich gute flammhemmende Eigenschaften der Fasermaterialien erzielen. Die flammhemmenden Eigenschaften besitzen gute Permanenz nach Waschprozessen. Die Rauchentwicklung bei thermischer Behandlung der Fasermaterialien ist gering.

EP 0 656 438 A1

Die nachfolgend beschriebene Erfindung betrifft Zusammensetzungen, welche mindestens Harnstoff oder ein Harnstoffsalz, ein Guanidinphosphat, ein Ammoniumpolyphosphat und ein Alkalimetallsalz einer anorganischen ein- oder mehrwertigen Säure enthalten. Sie betrifft ferner die Verwendung solcher Zusammensetzungen für die Behandlung von Fasermaterialien.

Es ist bekannt, Fasermaterialien, z.B. in Form textiler Flächengebilde, mit Zusammensetzungen in Form wäßriger Lösungen oder Dispersionen zu behandeln, um ihnen flammhemmende Eigenschaften zu verleihen. Unter den Produkten, die hierfür bereits verwendet worden sind, befinden sich unter anderem Lösungen und Dispersionen, welche Stickstoff- und/oder Phosphorverbindungen enthalten. So beschreibt beispielsweise die WO 89-08735 eine flammhemmende Zusammensetzung auf rein anorganischer Basis, welche Ammonium- und Natriumsalze der Phosphor- und Kohlensäure enthält. Der Nachteil dieser rein anorganischen Zusammensetzungen besteht darin, daß sie einerseits auf Fasermaterialien einen nicht voll zufriedenstellenden Effekt bezüglich flammhemmender Wirkung ergeben, und daß sie andererseits bezüglich der Permanenz nach Wässerungsprozessen zu wünschen übrig lassen. Die EP-A 449 159, die DE-A 21 30 793, die EP-A 460 516 und die US-A 36 44 597 beschreiben flammhemmende Zusammensetzungen, welche Ammoniumpolyphosphate und Harnstoff enthalten. Diese Zusammensetzungen sind jedoch ebenfalls noch nicht voll zufriedenstellend, was die Effektivität der flammhemmenden Wirkung und deren Permanenz nach Wässerungsprozessen betrifft. Hinzu kommt, daß diese Zusammensetzung zu einer starken und störenden Rauchentwicklung bei der thermischen Behandlung ausgerüsteter Fasermaterialien wie z.B. Textilgeweben führen. Diese thermischen Behandlungen werden beispielsweise bei einer Temperatur von 150 bis 160 °C durchgeführt und sind vielfach zur Erzielung optimaler Textileigenschaften erforderlich.

Gemäß WO 90/13699 enthalten flammhemmende Zusammensetzungen organische Stickstoffverbindungen wie z.B. Harnstoff und außerdem ein Ammoniumphosphat sowie ein Ammoniumhalogenid. Zusammensetzungen, welche Ammoniumpolyphosphat oder Alkalimetallsalze anorganischer Säuren enthalten, werden in dieser WO-Anmeldung nicht erwähnt. Neben der Tatsache, daß Halogenide in Flammschutzmitteln wegen der aus ihnen entstehenden Zersetzungsprodukte nicht in allen Fällen akzeptiert werden, besteht ein Nachteil von Zusammensetzungen gemäß dieser WO-Anmeldung ebenfalls in der Rauchbildung bei Temperaturen in der Größenordnung von 150 - 160 °C.

Der vorliegenden Erfindung lag die Aufgabe zugrunde, eine Zusammensetzung zu entwickeln, welche sich für die Behandlung von Fasermaterialien eignet, um diesen flammhemmende Eigenschaften zu verleihen und welche die oben beschriebenen Nachteile bekannter Flammschutzmittel nicht aufweist. Insbesondere sollte eine Zusammensetzung zur Verfügung gestellt werden, welche auch ohne die Anwesenheit von Halogenidanionen hocheffektiv ist, bei der thermischen Behandlung ausgerüsteter Fasermaterialien wie z.B. Textilien auf 150 - 160 °C höchstens geringe Rauchbildung verursacht und gutes Effektniveau der flammhemmenden Wirkung bei guter Permanenz zeigt.

Die Aufgabe wurde gelöst durch eine Zusammensetzung, welche mindestens folgende Komponenten enthält

a) ein Ammoniumpolyphosphat
b) Harnstoff oder ein Salz des Harnstoffs
c) ein Phosphat des Guanidins
d) ein Salz der allgemeinen Formel

$M_aH_{n-a}X$

worin M für ein Alkalimetallion, vorzugweise für ein Natrium- oder Kaliumion, H für Wasserstoff, X für ein anorganisches Anion, n für die Wertigkeit von X und a für eine Zahl von 1 bis n steht.

Es war überraschend, daß Zusammensetzungen der genannten Art bekannten flammhemmenden Formulierungen überlegen sind, was eine oder mehrere der Eigenschaften Rauchentwicklung bei thermischer Behandlung behandelter Fasermaterialien, Effektniveau des Flammschutzes und Permanenz der flammhemmenden Wirkung betrifft. Es ist anzunehmen, daß dies auf einen synergistischen Effekt der genannten vier Komponenten a) bis d) zurückzuführen ist. Durch entsprechende Vergleichsuntersuchungen ergab sich nämlich, daß Zusammensetzungen, welche nur die Komponenten a) bis c) also kein Alkalimetallsalz enthielten, eine stärkere Rauchentwicklung verursachten, wenn behandelte Textilien auf 150 °C erhitzt wurden. Zusammensetzungen, welche Komponenten a), c) und d), nicht aber Komponente b) (Harnstoff) enthielten, zeigten eine schlechtere Permanenz der flammhemmenden Wirkung nach Wässerung ("soaking test") entsprechend behandelter Textilien. Beim Fehlen der Komponenten a) und/oder c) war das Niveau der flammhemmenden Wirkung niedriger als bei erfindungsgemäßen Zusammensetzungen.

Erfindungsgemäße Zusammensetzungen eignen sich ausgezeichnet zur Behandlung von Fasermaterialien und verleihen diesen Materialien flammhemmende Eigenschaften. Insbesondere zur Behandlung von Flächengebilden aus Fasermaterialien wie Geweben, Gewirken, Vliesen, non-wovens sind die Zusammensetzungen geeignet. Vorzugsweise handelt es sich bei diesen Flächengebilden um textile Artikel, welche aus Cellulose, z.B. Baumwolle bestehen oder welche Cellulosefasern in Mischung mit anderen Fasern enthalten. Ein Beispiel für Artikel, welche mit erfindungsgemäßen Zusammensetzungen flammhemmend ausgerüstet werden können, sind Möbelbezugsstoffe. Zur Behandlung der Fasermaterialien können die erfindungsgemäßen Zusammensetzungen in Form von Lösungen oder Dispersionen eingesetzt werden, bevorzugt sind hierbei aus Umwelt- und Kostengründen wäßrige Lösungen oder Dispersionen. Ein weiterer Vorteil erfindungsgemäßer Zusammensetzungen besteht darin, daß sie auf behandelten Textilien keine oder nur geringe Vergilbungsneigung verursachen, sofern nicht neben den Komponenten a) bis d) zusätzliche Produkte eingesetzt werden, welche die Vergilbungstendenz fördern.

Vorzugsweise enthalten erfindungsgemäße Zusammensetzungen keine Halogenidanionen, obwohl in Einzelfällen ein Zusatz von Halogenidionen zweckmäßig sein kann.

Die Herstellung erfindungsgemäßer Zusammensetzungen erfolgt im Normalfall durch bloßes Vermischen, gegebenenfalls bei erhöhter Temperatur. Wäßrige Lösungen oder Dispersionen erfindungsgemäßer Zusammensetzungen lassen sich durch Einrühren der Bestandteile oder einer vorgefertigten Mischung mehrerer dieser Bestandteile herstellen. Hierbei können gegebenenfalls erhöhter Druck, erhöhte Temperatur und/oder Homogenisiervorrichtungen zur Anwendung kommen.

Komponente a):

Erfindungsgemäße Zusammensetzungen enthalten mindestens ein Ammoniumpolyphosphat (Komponente a)). Sie können auch mehrere Ammoniumpolyphosphate, z.B. solche mit unterschiedlicher Wasserlöslichkeit, enthalten. Vorzugsweise besitzt mindestens eines der anwesenden Ammoniumpolyphosphate gute Löslichkeit in Wasser, z.B. eine Löslichkeit von mehr als 400 g/l. Neben Ammoniumpolyphosphat können erfindungsgemäße Zusammensetzungen zusätzlich Ammoniummonophosphat oder Metallphosphate, bzw. Metallhydrogen(poly)phosphate enthalten. Unter "Ammoniumpolyphosphaten" werden Verbindungen verstanden, welche $NH_4^+$ -Ionen als Kationen enthalten und welche Anionen enthalten, die sich von sauren Orthophosphaten, d.h. von P-OH-Bindungen enthaltenden Orthophosphaten durch Kondensation unter Wasserabspaltung ableiten. Sie müssen jedoch nicht auf diese Weise, d.h. durch Wasserabspaltung aus sauren Orthophosphaten, sondern können auch auf anderen, dem Fachmann bekannten Wegen hergestellt worden sein. Unter den Begriff "Ammoniumpolyphosphate" fallen im Zusammenhang mit der vorliegenden Erfindung also unter anderem auch neutrale oder saure Diphosphate der Formel $(NH_4)_y\,(H)_{4-y}\,P_2O_7$ mit y = 1 bis 4. Als Ammoniumpolyphosphate werden in erfindungsgemäßen Zusammensetzungen kondensierte Phosphate, die Anionen folgender Struktur enthalten, eingesetzt:

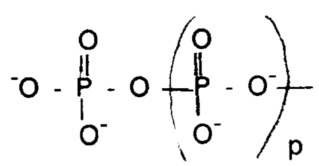

wobei p eine Zahl von 1 bis 100, vorzugsweise von 4 bis 30, insbesondere 9 bis 20 ist. Die zugehörigen Kationen sind Ammoniumionen und Wasserstoffionen, wobei pro Anion mindestens ein $NH_4^+$ -Kation vorliegen muß. Vorzugsweise sind 50 % bis 100 % aller Kationen dieser Ammoniumpolyphosphate $NH_4^+$ -Kationen. Vorzugsweise besitzt p deshalb niedrige Werte von 1 bis 30, insbesondere 4 bis 30 bzw. 9 bis 20, da in diesem Fall die Ammoniumpolyphosphate wasserlöslich sind. Bei hohen Werten von p, insbesondere von 50 bis 100, weisen die Phosphate dagegen nur teilweise Wasserlöslichkeit auf und müssen dann in Form von Dispersionen eingesetzt werden.

Komponente b):

Die oben genannte Komponente b) der erfindungsgemäßen Zusammensetzungen ist Harnstoff oder ein Salz des Harnstoffs. Je nach der Anwesenheit oder Abwesenheit saurer Komponenten in erfindungsgemäßen Zusammensetzung kann Harnstoff in freier Form oder in Form eines Salzes einer Säure vorliegen. Im letzten Fall sind die Anionen der entsprechenden Harnstoffsalze vorzugsweise die Anionen anorganischer

Säuren, z.B. $HPO_4^{2-}$, $H_2PO_4^-$, $PO_4^{3-}$, $HCO_3^-$, $CO_3^{2-}$, $HSO_4^-$, $SO_4^{2-}$.

Komponente c):

Als Komponente c) der erfindungsgemäßen Zusammensetzungen wird ein Phosphat des Guanidins verwendet. Hierbei handelt es sich um die aus Orthophosphorsäure und/oder einer Polyphosphorsäure und Guanidin erhältlichen Salze, also um Orthophosphate und/oder Polyphosphate des Guanidins. Unter Polyphosphaten des Guanidins sind in diesem Zusammenhang Verbindungen zu verstehen, welche die gleichen Anionen enthalten, wie sie oben für den Fall der Ammoniumpolyphosphate (Komponente a)) beschrieben wurden. Polyphosphate des Guanidins umfassen also im Zusammenhang mit den erfindungsgemäßen Zusammensetzungen neben Phosphaten mit höherem Kondensationsgrad auch Diphosphate, Triphosphate und andere Phosphate des Guanidins, deren Phosphatanionen niedrigen Kondensationsgrad aufweisen, d.h. eine niedrige Anzahl von Phosphoratomen pro Anion. Die als Komponente c) verwendbaren Phosphate des Guanidins können auch Hydrogenphosphatanionen, also saure Phosphatanionen aufweisen. Besonders bevorzugt als Komponente c) erfindungsgemäßer Zusammensetzungen sind die aus 1,8 - 2,2 Mol Guanidin und 1 Mol Orthophosphorsäure erhältlichen Salze.

Komponente d):

Erfindungsgemäße Zusammensetzungen enthalten mindestens ein Alkalimetallsalz der Formel $M_aH_{n-a}X$. Sie können auch mehrere voneinander verschiedene Salze enthalten, die unter diese Formel fallen. In der Formel steht M für ein Alkalimetallion, vorzugsweise ein Natrium- oder Kaliumion; X steht für ein anorganisches Anion. Bevorzugt als anorganische Anionen X sind Phosphatanionen, das Carbonatanion oder das Sulfatanion. Als Phosphatanionen kommen insbesondere Orthophosphat oder ein Polyphosphat von der oben beschriebenen Art in Betracht. In der genannten Formel steht n für die Wertigkeit des Anions X; bevorzugt werden mehrwertige, insbesondere zwei oder dreiwertige, Anionen X verwendet. In der allgemeinen Formel für die Salze kann a die Werte von 1 bis n annehmen, d.h. es ist immer ein Alkalimetall anwesend, und es kann sich um saure Anionen, also z.B. Hydrogenphosphate, -carbonate oder - sulfate oder auch um Dihydrogenphosphate handeln. Solche sauren Salze bei denen n - a = 1 oder 2 ist, werden als Komponente d) bevorzugt. Zusammensetzungen, welche nur die Komponenten a) bis d) enthalten und in denen keine schwer wasserlöslichen Polyphosphate verwendet werden, sind gut in Wasser löslich und können daher in Form wäßriger Lösungen für die Behandlung von Fasermaterialien wie z.B. Geweben eingesetzt werden. Wäßrige Lösungen erfindungsgemäßer Zusammensetzungen besitzen im Normalfall einen pH-Wert im Bereich von 6 bis 8.
Kommen Polyphosphate mit höherem Kondensationsgrad zum Einsatz, weiche weniger gute bis schlechte Löslichkeit in Wasser aufweisen, lassen sich erfindungsgemäße Zusammensetzungen in Form von Dispersionen in Wasser erhalten, wenn man geeignete Dispergatoren mitverwendet. Eine bevorzugte Ausführungsform erfindungsgemäßer Zusammensetzungen besteht darin, daß die Zusammensetzungen eine zusätzliche Komponente e) enthalten. Komponente e) ist ein Dispergator oder ein Gemisch von Dispergatoren, z.B. von solchen mit unterschiedlichen HLB-Werten. Die zusätzliche Verwendung von einem oder mehreren Dispergatoren ist jedoch nicht in erster Linie deshalb bevorzugt, damit schwerlösliche Polyphosphate verwendet werden können. Der Grund hierfür ist vielmehr darin zu sehen, daß ein zusätzlicher Gehalt an Dispergator es ermöglicht, erfindungsgemäße Zusammensetzungen mit weiteren Produkten zu kombinieren, die nicht wasserlöslich, aber wasserdispergierbar sind. Auf diese Weise kann die flammhemmende Wirkung der Zusammensetzungen durch andere Effekte ergänzt werden. Hierzu können bekannte Weichgriffmittel und/oder Cellulosevernetzer zugesetzt werden oder ebenfalls bekannte Produkte, welche den behandelten Fasermaterialien wasser- und/oder ölabweisende Eigenschaften verleihen. Zu den letztgenannten Produkten gehören insbesondere Silikone und Fluorverbindungen. Die Kombination erfindungsgemäßer Zusammensetzungen mit diesen zusätzlichen Produkten kann darin bestehen, daß den Zusammensetzungen bereits bei ihrer Herstellung diese Zusätze sowie gegebenenfalls Dispergatoren hinzugefügt werden. Eine andere Möglichkeit besteht darin, die Zusätze erst nach dem Lösen bzw. Dispergieren der Zusammensetzungen in Wasser hinzuzufügen oder die Zusammensetzungen mit wäßrigen Dispersionen zu vermischen, welche diese Zusätze bereits enthalten.

Als Dispergatoren, welche unter Umständen den Zusatz von in Wasser nicht löslichen weiteren Produkten erst ermöglichen, kommen die für diesen Zweck üblichen Verbindungsklassen in Betracht, insbesondere nichtionogene Dispergatoren wie z.B. ethoxilierte Alkohole und Carbonsäuren. Auch ethoxilierte Amine können eingesetzt werden. So haben sich z.B. Alkoxypropylaminethoxilate mit etwa 6 bis 14 C-Atomen als geeignet erwiesen, um erfindungsgemäße Zusammensetzungen zusammen mit Produkten in

Wasser zu dispergieren, welche Geweben öl- und/oder schmutzabweisende Eigenschaften verleihen.

Erfindungsgemäße Zusammensetzungen können zusätzlich ein oder mehrere Alkylpolyglykoside enthalten. Alkylpolyglykoside können als Dispergatoren in erfindungsgemäßen Zusammensetzungen wirken, z.B. dann, wenn diese mit fluorhaltigen Substanzen kombiniert werden. Diese Zusätze an fluorhaltigen Produkten werden unten beschrieben. Alkylpolyglykoside sind bekannte handelsübliche Produkte. Es sind Alkylpolyglykoside geeignet, welche unter die Formel L - O - $Z_t$ oder unter die Formel L - C(O) - O - $Z_t$ fallen. L bedeutet hierbei einen unverzweigten oder verzweigten, gesättigten oder ungesättigten Alkylrest mit 6 bis 16 Kohlenstoffatomen, Z steht für einen Oligoglykosidrest und t besitzt im Mittel einen Wert von 1 bis 5. Geeignete Alkylpolyglykoside und die Herstellung von Alkylpolyglykosiden sind in der DE-A 39 25 846, der DE 28 41 623, und der EP-A 0 362 671 beschrieben.

In einer weiteren bevorzugten Ausführungsform enthalten erfindungsgemäße Zusammensetzungen als Komponente f) noch ein oder mehrere fluorhaltige Produkte, welche als solche für die Behandlung von Fasermaterialien bereits bekannt sind. Fluorhaltige Produkte werden verwendet, um Fasermaterialien wie z.B. Textilien ölabweisende und/oder schmutzabweisende Eigenschaften zu verleihen. An Stelle einer Zugabe eines oder mehrerer solcher fluorhaltiger Produkte zu erfindungsgemäßen Zusammensetzungen kann die gemeinsame Anwendung auch so durchgeführt werden, daß man einer Flotte vor der Foulardierung ein fluorhaltiges Produkt zusetzt.

Für die Kombination mit erfindungsgemäßen Zusammensetzungen eignen sich als Komponente f) insbesondere Oligo- oder Polyurethane, deren aus der Alkoholkomponente stammende Gruppen perfluoraliphatische Reste enthalten. Ferner sind Copolymere mit Urethan- und Siloxaneinheiten gut geeignet, bei denen wiederum in den Urethaneinheiten perfluoraliphatische Reste vorliegen. Geeignete Perfluoralkylgruppen enthaltende Polyurethane und Copolymere sowie Verfahren zu ihrer Herstellung werden in der EP-A 0 325 918, der EP-A 0 459 125, der EP-A 0 467 083, der EP-A 0 348 350 und in der EP-A 0 458 742 beschrieben.

Außer den genannten, perfluorierte Reste enthaltenden Polyurethanen und Copolymeren eignen sich als Komponente f) noch perfluorierte Reste enthaltende Produkte, die sich durch Umsetzung veretherter Hexamethylolmelamine mit Thiolen der Formel $R_f$ - E - SH erhalten lassen. In dieser Formel bedeutet $R_f$ einen perfluorierten Alkylrest mit 4 bis 14 C-Atomen und E den Ethylen- oder den Isopropylenrest. Diese Produkte und Verfahren zu ihrer Herstellung sind in der EP-A 0 073 364 beschrieben. Eine weitere Klasse sehr gut als Komponente f) geeigneter Verbindungen sind Polyacrylsäureester oder Polymethacrylsäureester, deren Alkoholkomponente perfluorierte Alkylreste enthält, insbesondere Poly(meth-)acrylsäureester von Alkoholen der Formel $R_f$ $(CH_2)_q$ OH, worin $R_f$ die oben angegebene Bedeutung und q einen Wert von 0 bis 6, vorzugsweise von 2 oder 3 besitzt. Neben diesen fluorhaltigen Poly(meth-)acrylaten sind weiterhin als Komponente g) Produkte der Formel

$$R_f - (CH_2)_q - OOC - (CH\ R')_m - COO\ (CH_2)_q - R_f$$

geeignet, worin $R_f$ und q die oben angegebenen Bedeutungen besitzen, m einen Wert von 1 bis 8, vorzugsweise von 2 bis 6 hat und worin alle anwesenden Reste R' unabhängig voneinander für Wasserstoff oder einen Alkylrest mit 1 bis 4 C-Atomen stehen.

Erfindungsgemäße Zusammensetzungen besitzen gute Eigenschaften bezüglich flammhemmender Wirkung auf Fasermaterialien und Permanenz der flammhemmenden Wirkung, sowie im Hinblick auf geringe Rauchentwicklung bei thermischer Behandlung ausgerüsteter Fasermaterialien. Diese guten Eigenschaften werden insbesondere dann erzielt, wenn die Komponenten a) bis f) in folgenden Mengenverhältnissen relativ zueinander vorliegen:

| | |
|---|---|
| Komponente a): | 15 bis 35 Gew.teile, vorzugsweise 20 bis 30 Gew.teile |
| Komponente b): | 10 bis 30 Gew.teile, vorzugsweise 15 bis 25 Gew.teile |
| Komponente c): | 1 bis 10 Gew.teile, vorzugsweise 3 bis 7 Gew.teile |
| Komponente d): | 0,5 bis 5 Gew.teile, vorzugsweise 1 bis 3 Gew.teile |
| Komponente e): | 0 bis 0,5 Gew.teile, vorzugsweise 0,3 bis 0,4 Gew.teile |
| Komponente f): | 0 bis 10 Gew.teile, vorzugsweise 6 bis 8 Gew.teile |

Alle diese Zahlen beziehen sich jeweils auf den Gehalt an wasserfreier Wirksubstanz.

Erfindungsgemäße Zusammensetzungen werden bevorzugt in Form wäßriger Lösungen oder Dispersionen eingesetzt. Bei der Behandlung von Fasermaterialien mit diesen Lösungen oder Dispersionen kann man beispielsweise mit einem Foulard-Verfahren arbeiten. Die hierfür verwendeten Flotten können neben erfindungsgemäßen Zusammensetzungen zusätzlich Produkte enthalten, wie sie für die Behandlung von Fasermaterialien üblich sind, z.B. Weichgriffmittel, Cellulosevernetzer, wasserabweisende Mittel usw. Bevorzugt werden mit erfindungsgemäßen Zusammensetzungen faserige Flächengebilde in Form von Geweben,

Gewirken oder Vliesen behandelt. Sehr gut geeignet sind erfindungsgemäße Zusammensetzungen für die Behandlung von Materialien, welche aus natürlichen oder regenerierten Cellulosefasern bestehen oder solche Fasern in Mischung mit anderen Fasern enthalten. Die Behandlung kann mittels Foulardieren bei üblichen Flottenkonzentrationen, z.B. im Bereich von 300 bis 600 g/l erfolgen. Nach der Behandlung werden die Fasermaterialien in üblicher Weise getrocknet und vielfach einer weiteren thermischen Behandlung z.B. bei 150 bis 170 °C unterzogen. Auf diese Art behandelte Flächengebilde aus Fasermaterialien finden beispielsweise als Möbelbezugsstoffe Anwendung.

Die Erfindung wird nachfolgend durch Beispiele veranschaulicht. Bei diesen Beispielen wurden folgende Untersuchungsmethoden angewandt:

An Fasermaterialien, welche mit erfindungsgemäßen Zusammensetzungen behandelt worden waren und an Vergleichs-Fasermaterialien wurden Brenntests ohne und mit vorhergehender Wässerung durchgeführt. Für die Ermittlung des Brennverhaltens nach Wässerung (soaking) wurden die Proben in Anlehnung an British Standard Test BS 5852, Part 1, folgendermaßen vorbehandelt: Das zu prüfende Gewebe von etwa 200 x 600 mm wird ausgebreitet in ein ausreichend großes Gefäß gelegt, das die 20-fache Gewichtsmenge Flüssigkeit, bezogen auf das Warengewicht, enthält. Die Flüssigkeit in diesem Gefäß enthält 0,5 g/l eines nichtionogenen Netzmittels (TINOVETIN ® JUN der Ciba-Geigy AG) und Wasser. In dieser Tensidlösung wird bei einer Anfangstemperatur von 40 °C das Prüfmaterial 30 Minuten belassen.
Anschließend wird es herausgenommen, in ein Gefäß mit der 20 fachen Menge Wasser, bezogen auf das Warengewicht, gegeben und 2 Minuten ohne Bewegung in dem Gefäß belassen. Anschließend wird das Muster einmal foulardiert und bei 110 °C 10 Min. getrocknet. Die Brenntests nach Wässerung liefern Aussagen über die Permanenz der Effekte. Das Brennverhalten der nicht vorbehandelten und der wie oben angegeben vorbehandelten (gewässerten) Proben wurde nach DIN 54 336 (jedoch nur mit 3 sec Anbrennzeit, nicht mit 15 sec. Anbrennzeit) bestimmt. Die Rauchentwicklung bei thermischer Behandlung wurde an Baumwoll-Köpern (400 x 400 mm / 250 - 300 g/m$^2$) visuell beurteilt; für diese Beurteilung wurden die Proben 5 Minuten in einem Trockenschrank bei 160 °C aufbewahrt. Nach Öffnen des Trockenschranks erfolgte die visuelle Beurteilung.

<u>Beispiel 1</u> (Brenntests)

Folgende Zusammensetzungen Z 1 bis Z 10 wurden durch Mischen der Komponenten unter Rühren und leichtem Erwärmen des Gemischs hergestellt:

| | $H_2O$ | Harnstoff | Sekundäres Guanidinphosphat | $K_2HPO_4$ | HOSTAFLAM® AP 420 (Fa. Hoechst AG) ( =wäßrige Ammoniumpolyphosphat-Lösung) |
|---|---|---|---|---|---|
| Z 1 | 24 | 25 | 5 | 1 | 45 |
| Z 2 | 16 | 15 | 7 | 1,5 | 61 |
| Z 3 | 10 | 25 | 5 | 5 | 55 |
| Z 4 | 5 | - | 9 | 2 | 85 |
| Z 5 | - | - | 8 | 8 | 85 |
| Z 6 | 35 | - | 5 | 5 | 55 |
| Z 7 | 38 | 52 | - | 11 | - |
| Z 8 | 47 | 43 | 9 | 2 | - |
| Z 9 | 22 | 28 | - | 1 | 50 |
| Z 10 | 47 | 51 | - | 2 | - |

Z 1 bis Z 3 stellen erfindungsgemäße Zusammensetzungen dar, Z 4 bis Z 10 nicht erfindungsgemäße Vergleichsbeispiele. Alle in obiger Tabelle angegebenen Zahlenwerte sind Gewichtsteile.

Die Z 5 enthält Wasser, das aus der Ammoniumpolyphosphatlösung stammt, jedoch wurde kein Wasser zusätzlich verwendet.

Mit den Zusammensetzungen Z 1 bis Z 10 wurden Gewebe aus Baumwolle (180 g/$m^2$) bei Raumtemperatur über Foulardierung behandelt. Die Foulardflotten enthielten jeweils 600 g/l Z 1 bis Z 10, die Flottenaufnahme nach Abquetschen betrug jeweils ca. 70 %, bezogen auf Gewebegewicht. Getrocknet

wurde bei 110 °C während 10 Minuten, daran schloß sich eine Kondensation bei 160 °C / 4 Minuten an. An den so behandelten Proben wurde ohne und mit vorhergehender Wässerung (soaking) das Brennverhalten bestimmt.

Bei den nachfolgend dargestellten Ergebnissen ist jeweils Brennzeit und Nachglimmzeit in Sekunden angegeben. Die Brennzeit ist die Zeit, die die Probe nach Entfernen der Anbrennquelle unter Flammenerscheinung bis zum Erlöschen weiterbrennt, die Glimmzeit ist diejenige Zeit, während der die Probe nach Erlöschen der Flamme weiterglimmt.

Ergebnisse:

| | Z 1 | Z 2 | Z 3 | Z 4 | Z 5 | Z 6 | Z 7 | Z 8 | Z 9 | Z 10 |
|---|---|---|---|---|---|---|---|---|---|---|
| Brennzeit ohne Wässerung | 0 | 0 | 0 | 0 | 0 | 0 | 0 | X | 0 | X |
| Brennzeit mit Wässerung | 3 | 5 | 2 | X | X | X | X | X | 12 | X |
| Glimmzeit ohne Wässerung | 0 | 0 | 0 | 0 | 0 | 0 | 45 | X | 0 | X |
| Glimmzeit mit Wässerung | 0 | 0 | 0 | X | X | X | X | X | 0 | X |

Das X in obiger Tabelle bedeutet, daß die Probe vollständig, d.h. ohne Erlöschen der Flamme, verbrannte.

Beispiel 2 (Rauchtest)

Für den Test auf Rauchentwicklung wurden neben der oben genannten Zusammensetzung Z 1 folgende Zusammensetzungen Z 11 bis Z 13 verwendet:

| | Z 11 (erfindungsgemäß) | Z 12 (Vergleich) | Z 13 (Vergleich) |
|---|---|---|---|
| HOSTAFLAM ® AP 420 | 45 | 45 | - |
| sek. Guanidinphosphat | 5 | 5 | - |
| Harnstoff | 25 | 25 | 42 |
| $K_2HPO_4$ | 5 | - | - |
| Wasser | 20 | 25 | 42 |
| $NH_4H_2PO_4$ | - | - | 8 |
| $H_2N\text{-}SO_3H$ | - | - | 8 |

Mit den Zusammensetzungen Z 1, Z 11 bis Z 13 wurden Proben aus Baumwollköper (400 x 400 mm / 250 - 300 g/m$^2$) über Foulard behandelt und getrocknet (jedoch nicht kondensiert), wie unter Beispiel 1 angegeben. Anschließend wurden die Rauchtests durchgeführt.

Ergebnisse:

| | Z 1 | Z 11 | Z 12 | Z 13 |
|---|---|---|---|---|
| Rauchentwicklung | schwach | schwach | mittel | stark |

Die Ergebnisse mit Z 12 und Z 13 zeigen, daß der Zusatz eines Alkalimetallsalzes (Komponente d) von Anspruch 1) erforderlich ist, um nur geringe Rauchentwicklung zu bewirken und daß andere anorganische Verbindungen dieses Alkalimetallsalz diesbezüglich nicht ersetzen können.

**Patentansprüche**

**1.** Zusammensetzung, welche mindestens folgende Komponenten enthält
   a) ein Ammoniumpolyphosphat
   b) Harnstoff oder ein Salz des Harnstoffs

c) ein Phosphat des Guanidins
d) ein Salz der allgemeinen Formel

$M_aH_{n-a}X$

worin M für ein Alkalimetallion, vorzugweise für ein Natrium- oder Kaliumion, H für Wasserstoff, X für ein anorganisches Anion, n für die Wertigkeit von X und a für eine Zahl von 1 bis n steht.

**2.** Zusammensetzung nach Anspruch 1, dadurch gekennzeichnet, daß sie eine wäßrige Dispersion oder Lösung ist, welche die Komponenten a) bis d) enthält.

**3.** Zusammensetzung nach Anspruch 1 oder 2, dadurch gekennzeichnet, daß in Komponente d) X für ein Phosphatanion, das Carbonatanion oder das Sulfatanion steht.

**4.** Zusammensetzung nach einem oder mehreren der Ansprüche 1 bis 3, dadurch gekennzeichnet, daß in Komponente d) n 2 oder 3 ist und n - a = 1 oder 2 ist.

**5.** Zusammensetzung nach einem oder mehreren der Ansprüche 1 bis 4, dadurch gekennzeichnet, daß sie zusätzlich als Komponente e) einen oder mehrere Dispergatoren enthält.

**6.** Zusammensetzung nach einem oder mehreren der Ansprüche 1 bis 5, dadurch gekennzeichnet, daß sie zusätzlich als Komponente f) eine oder mehrere fluorhaltige Substanzen für die ölabweisende und/oder schmutzabwelsende Ausrüstung von Fasermaterialien enthält.

**7.** Zusammensetzung nach Anspruch 6, dadurch gekennzeichnet, daß die fluorhaltigen Substanzen aus perfluoraliphatische Reste enthaltenden Polyurethanen und perfluoraliphatische Reste enthaltenden Copolymeren mit Urethan- und Siloxaneinheiten sowie aus Poly(meth-)acrylaten, deren Alkoholkomponenten perfluoraliphatische Reste enthalten, ausgewählt sind.

**8.** Zusammensetzung nach einem oder mehreren der Ansprüche 1 bis 7, dadurch gekennzeichnet, daß sie die Komponenten a) bis f) in folgenden Mengen, jeweils bezogen auf Trockensubstanz, enthält.

| | |
|---|---|
| Komponente a): | 15 bis 35 Gew.teile, vorzugsweise 20 bis 30 Gew.teile |
| Komponente b): | 10 bis 30 Gew.teile, vorzugsweise 15 bis 25 Gew.teile |
| Komponente c): | 1 bis 10 Gew.teile, vorzugsweise 3 bis 7 Gew.teile |
| Komponente d): | 0,5 bis 5 Gew.teile, vorzugsweise 1 bis 3 Gew.teile |
| Komponente e): | 0 bis 0,5 Gew.teile, vorzugsweise 0,3 bis 0,4 Gew.teile |
| Komponente f): | 0 bis 10 Gew.teile, vorzugsweise 6 bis 8 Gew.teile |

**9.** Verwendung einer Zusammensetzung gemäß einem oder mehreren der Ansprüche 1 bis 8 zur Behandlung von Fasermaterialien.

**10.** Verwendung nach Anspruch 9, dadurch gekennzeichnet, daß die Fasermaterialien Flächengebilde in Form von Geweben, Gewirken oder Vliesen sind, welche aus Cellulose bestehen oder Cellulose enthalten und daß die Zusammensetzung in Form einer wäßrigen Lösung oder Dispersion eingesetzt wird.

Europäisches Patentamt

# EUROPÄISCHER RECHERCHENBERICHT

Nummer der Anmeldung
EP 94 11 6790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 496 098 (PFERSEE CHEMIE GMBH)<br>* Seite 2, Zeile 50 - Seite 5, Zeile 53; Ansprüche *<br>--- | 1,2,5-10 | D06M11/72<br>D06M13/432<br>D06M11/71<br>D06M11/55<br>D06M11/76<br>D06M15/277<br>D06M15/576<br>D06M15/657 |
| A | EP-A-0 357 421 (ALBRIGHT & WILSON LTD.)<br>* Ansprüche *<br>--- | 1,2,5-10 | |
| D,A | EP-A-0 460 516 (ALBRIGHT & WILSON LTD.)<br>* das ganze Dokument *<br>--- | 1,2,5-10 | |
| A | DATABASE WPI<br>Section Ch, Week 7509,<br>Derwent Publications Ltd., London, GB;<br>Class E36, AN 75-14991W<br>& JP-A-49 075 898 (KANAGAWA PREFECTURE)<br>22. Juli 1974<br>* Zusammenfassung *<br>----- | 1 | |

RECHERCHIERTE SACHGEBIETE (Int.Cl.6)
D06M
C09K

Der vorliegende Recherchenbericht wurde für alle Patentansprüche erstellt

| Recherchenort | Abschlußdatum der Recherche | Prüfer |
|---|---|---|
| DEN HAAG | 3. März 1995 | Blas, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument